# EUROPÄISCHE PATENTSCHRIFT

(11) **EP 3 070 248 B1**
(45) Veröffentlichungstag und Bekanntmachung des Hinweises auf die Patenterteilung: **14.03.2018**
(21) Anmeldenummer: 16000627.6
(22) Anmeldetag: 16.03.2016
(51) Int. Cl.: E05F 5/00, E05F 1/16

(54) **KOMBINIERTE BESCHLEUNIGUNGS- UND VERZÖGERUNGSVORRICHTUNG MIT ÜBERLASTSCHUTZ**
COMBINED ACCELERATING AND DECELERATING DEVICE WITH OVERLOAD PROTECTION
DISPOSITIF D'ACCELERATION ET DE RETARD COMBINE AVEC PROTECTION CONTRE LA SURCHARGE

(30) Priorität: 17.03.2015 DE 102015003414
(43) Veröffentlichungstag der Anmeldung: 21.09.2016
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A1- 2 526 825
- WO-A1-2012/015294
- DE-A1-102011 115 662
- DE-U1-202004 018 189
- DE-U1-202009 005 433

## Beschreibung

Die Erfindung betrifft eine kombinierte Beschleunigungs- und Verzögerungsvorrichtung mit einem Trägergehäuse und mit einem entlang mindestens einer Führungsbahn des Trägergehäuses (13) zwischen einer kraft- und/oder formschlüssig arretierbaren Parkposition und einer Endposition verfahrbaren, mittels einer Beschleunigungsvorrichtung und mittels einer Verzögerungsvorrichtung belastbaren Mitnahmeelement, wobei die Beschleunigungsvorrichtung einen wiederholbar be- und entladbaren, am Trägergehäuse und am Mitnahmeelement gelagerten Federenergiespeicher aufweist, wobei die Zylinder-Kolbeneinheit einen dem Mitnahmeelement zugewandten, in der Führungsbahn geführten Führungsklotz trägt, wobei der Führungsklotz eine in Richtung des Mitnahmeelements zeigende, gewölbte Anschlagfläche hat und wobei das Mitnahmeelement eine in Richtung des Führungsklotzes zeigende, gewölbte Schiebefläche aufweist Aus der EP 1 562 458 A1 ist eine derartige Vorrichtung bekannt. Bei einer schlagartigen Beanspruchung des Mitnahmeelements kann das Schwenkgelenk zwischen dem Mitnahmeelement und dem Schlitten überlastet werden oder der sich schief stellende Schlitten die Kolbenstange außermittig belasten.

In der DE 10 2011 115 6662 A1 sind eine Kolbenstange eines Dämpfungszylinders und ein Mitnahmeelement mittels eines Schwenkgelenks miteinander verbunden.

Der vorliegenden Erfindung liegt daher die Aufgabe zugrunde, eine Vorrichtung zu entwickeln, die auch bei mehrfacher schlagartiger Belastung zuverlässig funktioniert.

Diese Problemstellung wird mit den Merkmalen des Hauptanspruches gelöst. Dazu weist die Verzögerungsvorrichtung mindestens eine hydraulische Zylinder-Kolbeneinheit mit einer Federrückstellung auf. Die Schiebefläche und die Anschlagfläche haben unterschiedliche Wölbungsradien, sodass sich die Anschlagfläche und die Schiebefläche maximal in einer Berührlinie kontaktieren. Außerdem ist beim Verfahren des Mitnahmeelements aus der Endposition in Richtung der Parkposition die Schiebefläche von der Anschlagfläche lösbar.

Weitere Einzelheiten der Erfindung ergeben sich aus den Unteransprüchen und der nachfolgenden Beschreibung schematisch dargestellter Ausführungsformen.
- Figur 1:: Isometrische Ansicht einer kombinierten Beschleunigungs- und Verzögerungsvorrichtung;
- Figur 2:: Längsschnitt von Figur 1;
- Figur 3:: Längsschnitt der Vorrichtung beim Laden des Energiespeichers;
- Figur 4:: Längsschnitt der Vorrichtung vor dem Auslösen des Mitnahmeeelements;
- Figur 5:: Mitnahmeelement;
- Figur 6:: Führungsklotz;
- Figur 7:: Detail von Figur 2.

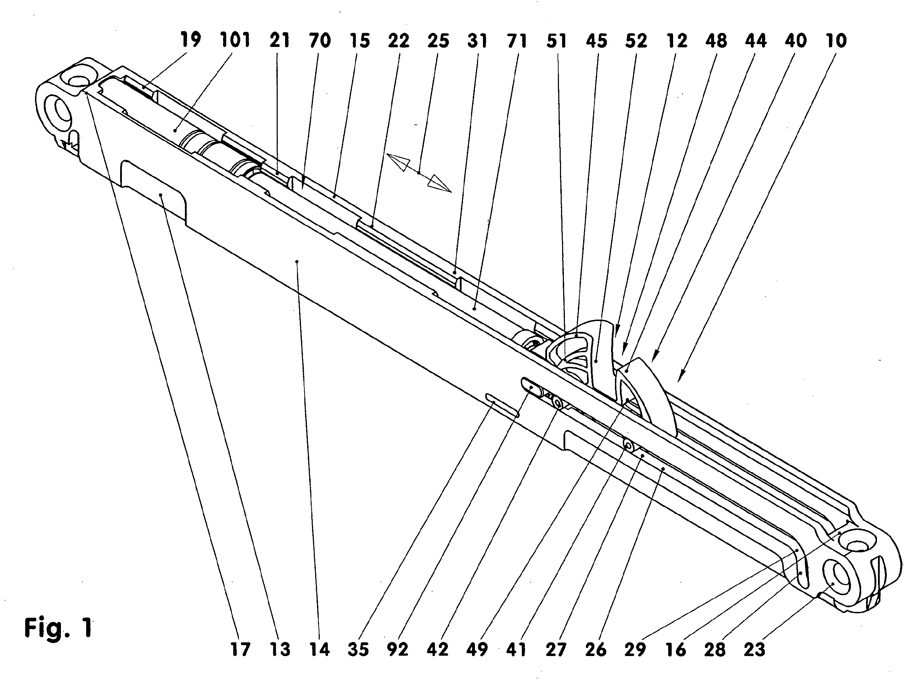

Die Figuren 1 und 2 und 7 zeigen eine kombinierte Beschleunigungs- und Verzögerungsvorrichtung (10) in einer isometrischen Ansicht und in einem Längsschnitt. Derartige Vorrichtungen (10) werden eingesetzt, um beispielsweise relativ zu einem feststehenden Möbelkorpus bewegliche Möbelteile, wie z.B. Schubladen, Schiebetüren, etc. gesteuert in eine Endlage zu fördern. Die Endlage kann hierbei eine geöffnete oder eine geschlossene Endlage des Möbelteils sein.

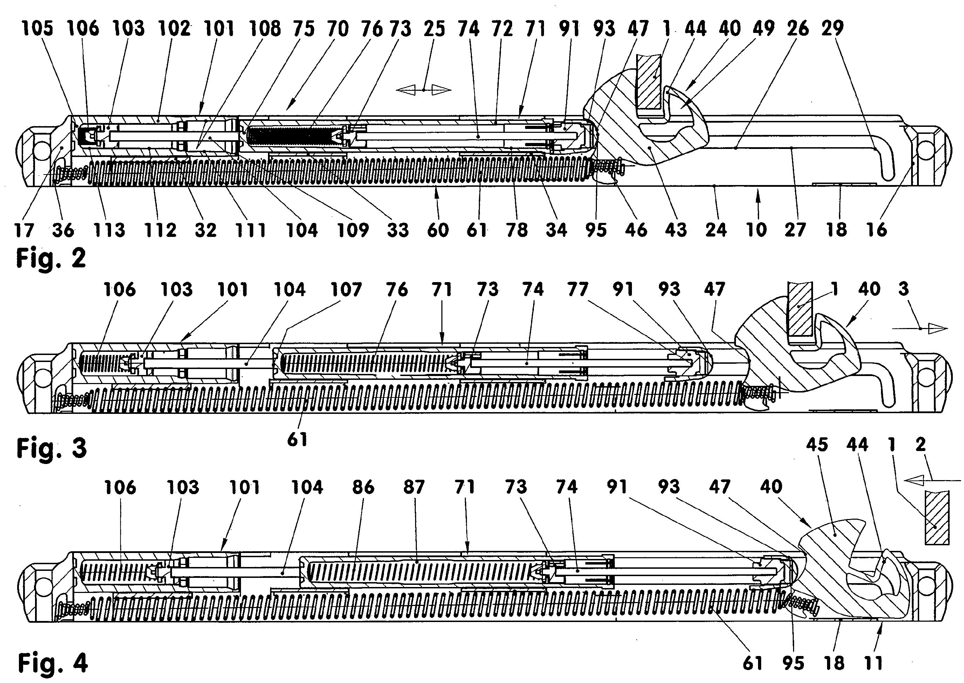

Im Einsatz ist die kombinierte Beschleunigungs- und Verzögerungsvorrichtung (10) beispielsweise am Möbelkorpus angeordnet, während das bewegliche Möbelteil einen Mitnehmer (1) trägt. Beim linearen Verschieben oder Verfahren des beweglichen Möbelteils in der Richtung der Endlage kontaktiert der Mitnehmer (1) vor dem Erreichen der Endlage ein Mitnahmeelement (40) der Beschleunigungs- und Verzögerungsvorrichtung (10). Dieses Mitnahmeelement (40) wird aus einer kraft- und/oder formschlüssig gesicherten Parkposition (11), vgl. Figur 4 ausgelöst. Nach dem Auslösen wird das Mitnahmeelement (40) mittels einer Beschleunigungsvorrichtung (60) beschleunigt und mittels einer diesem entgegenwirkenden Verzögerungsvorrichtung (70) verzögert. Die Beschleunigunsvorrichtung (60) umfasst einen wiederholbar be- und entladbaren Energiespeicher (61). Die Schublade, Schiebetür, etc. wird nun in die Richtung der z.B. geschlossenen Endlage gefördert, wo sie anschlagfrei stehenbleibt.

Die Beschleunigungs- und Verzögerungsvorrichtung (10) umfasst ein Trägergehäuse (13), das das Mitnahmeeelement (40), die Beschleunigungsvorrichtung (60) und die Verzögerungsvorrichtung (70) trägt. Das Trägergehäuse (13) ist beispielsweise rahmenförmig aufgebaut. Es hat zwei einander gegenüberliegende Seitenteile (14, 15), die mittels einer Stirnwand (16), einer Rückwand (17) und eines bodenseitig angeordneten Verbindungsstegs (18) sowie mehrerer Führungsstege (32 - 34) miteinander verbunden sind. Das Trägergehäuse (13) ist im Ausführungsbeispiel aus einem thermoplastischen Kunststoff hergestellt. An seinen beiden, in Längsrichtung (25) orientierten Enden hat es Befestigungsdurchbrüche (23).

An ihrem stirnseitigen Ende weisen beide Seitenteile (14, 15) einander kongruente Führungsbahnen (26) auf. Diese als langlochförmige Durchbrüche ausgebildeten Führungsbahnen (26) umfassen jeweils einen horizontalen Führungsabschnitt (27) und einen Halteabschnitt (28). Der Führungsabschnitt (27) und der Halteabschnitt (28) sind mittels eines bogenförmigen Übergangsabschnitts (29) miteinander verbunden.

Der jeweilige Führungsabschnitt (27) ist parallel zur Längsrichtung (25) der Beschleunigungs- und Verzögerungsvorrichtung (10) angeordnet. Über seine Länge hat er eine konstante Höhe. Der in Richtung des Bodens (24) orientierte Halteabschnitt (28) schließt mit dem in Richtung der Stirnseite zeigenden Führungsabschnitt (27) einen Winkel von z.B. 85 Grad ein. Die Führungsbreite des Halteabschnitts (28) und des tangential in die angrenzenden Abschnitte (27, 28) übergehenen Bogenabschnitts (29) entspricht der Höhe des Führungsabschnitts (27). Die Länge der einzelnen Führungsbahn (26) parallel zur Längsrichtung (25) ist beispielsweise länger als ein Drittel der Länge des Trägergehäuses (13).

An seiner Oberseite (31) hat das Trägergehäuse (13) Führungsleisten (19, 21, 22). Diese sind parallel zur Längsrichtung (25) orientiert und ragen beispielsweise mit einer Breite von zwei Millimetern in Richtung der vertikalen Mittenlängsebene der Beschleunigungs- und Verzögerungsvorrichtung (10). Die Führungsleisten (19, 21, 22) sind im Ausführungsbeispiel an den Seitenteilen (14, 15) jeweils einander gegenüber angeordnet. An beiden Seitenteilen (14, 15) sind z.B. jeweils drei Führungsleisten (19, 21, 22) angeordnet.

Die im mittleren Bereich des Trägergehäuses (13) angeordneten Führungsstege (32 - 34) sind beispielsweise in der Längsrichtung (25) versetzt zu den Führungsleisten (19, 21, 22) angeordnet. Hierbei ist im Ausführungsbeispiel der der Rückwand (17) nächstliegende mittlere Führungssteg (32) um zwei Millimeter tiefer angeordnet als die beiden anderen mittleren Führungsstege (33, 34).

Das Trägergehäuse (13) hat beispielsweise in seinen Seitenteilen (14, 15) im unteren Bereich mittig angeordnete Längsschlitze (35). Hier kann beispielsweise ein zusätzliches Befestigungselement eingreifen.

Das Mitnahmeelement (40) hat auf jeder Seite zwei Führungszapfen (41, 42), mit denen es in den Führungsbahnen (26) des Trägergehäuses (13) sitzt. Jeweils zwei einander abgewandte Führungszapfen (41; 42) fluchten miteinander.

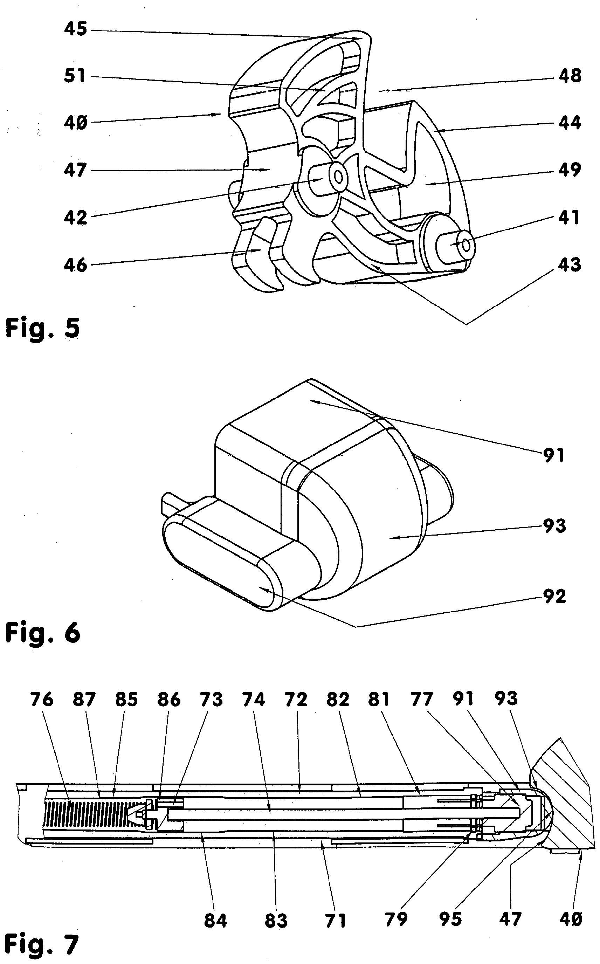

In der Figur 5 ist das Mitnahmeelement (40) als Einzelteil dargestellt. Es umfasst einen Tragkörper (43), einen Zugzapfen (44), einen Schubzapfen (45) sowie eine Federaufnahme (46). Beispielsweise ist das Mitnahmeelement (40) als Spritzgußteil hergestellt.

Der Tragkörper (43) trägt die Führungszapfen (41, 42). Er hat eine der Stirnwand (16) abgewandte Schiebefläche (47). Diese Schiebefläche (47) ist im Ausführungsbeispiel als einachsig gewölbte Fläche ausgebildet. Die gedachte Krümmungsachse liegt parallel zur Ebene der Führungsabschnitte (27) der Führungsbahnen (26) und normal zur Längsrichtung (25). Diese Krümmungsachse liegt auf der der Stirnwand (16) abgewandten Seite des Mitnahmeelements (40) außerhalb des Mitnahmeelements (40). Die Schiebefläche (47) kann auch mehrachsig, z.B. konkav gewölbt sein. Auch ist es denkbar, die Schiebefläche (47) mit einer konvexen Wölbung auszubilden.

An der Unterseite des Tragkörpers (43) ist die z.B. doppelhakenförmig ausgebildete Federaufnahme (46) angeordnet. In der Federaufnahme (46) ist als wiederholt aufladbarer Energiespeicher (61) ein Federenergiespeicher (61) gelagert. Das zweite Ende dieses als Zugfeder (61) ausgebildeten Federenergiespeichers (61) ist in einer im Trägergehäuse (13) angeordneten Federaufnahme (36) aufgenommen.

Der Zugzapfen (44) und der Schubzapfen (45) begrenzen eine Aufnahmeausnehmung (48). Der in Richtung der Stirnwand (16) orientierte Zugzapfen (44) ist niedriger als der Schubzapfen (45). Der Zugzapfen (44) weist eine zentrale Aussparung (49) auf, sodass der gesamte Zugzapfen (44) elastisch verformbar ausgebildet ist. Der Schubzapfen (45) hat Verstärkungsrippen (51). Kräfte, die auf die die Aufnahmeausnehmung (48) begrenzende Schubfläche (52) des Schubzapfens (45) einwirken, werden damit in den Tragkörper (43) geleitet.

Die Verzögerungsvorrichtung (70) umfasst im Ausführungsbeispiel zwei im Trägergehäuse (13) gelagerte hydraulische Zylinder-Kolbeneinheiten (71, 101). Die beiden Zylinder-Kolbeneinheiten (71, 101) sind in Reihe angeordnet, sodass die erste Zylinder-Kolbeneinheit (71) in Richtung des Mitnahmeelements orientiert ist und die zweite Zylinder-Kolbeneinheit (101) an der Rückwand (17) abstützbar ist. Jede der Zylinder-Kolbeneinheiten (71; 101) hat einen Zylinder (72; 102), in dem ein Kolben (73; 103) mittels einer Kolbenstange (74; 104) axial verschiebbar angeordnet ist. Zwischen dem Kolben (73; 103) und dem geschlossen Zylinderboden (75; 105) ist jeweils eine Rückstellfeder (76; 106) angeordnet.

Die Kolbenstange (74) der ersten Zylinder-Kolbeneinheit (71) hat einen Kolbenstangenkopf (77), der z.B. mit einer Presspassung in einem Führungsklotz (91) gehalten ist. Der kappenartig ausgebildete Führungsklotz (91) ist in der Figur 6 als Einzelteil dargestellt. Er hat zwei seitlich angeordnete längliche Führungsbolzen (92), die in den Führungsbahnen (26) des Trägergehäuses (13) gelagert sind. Die Führungslänge der Führungsbolzen (92) ist im Ausführungsbeispiel größer als die Höhe der Führungsbahn (26). Die der Kolbenstange (74) abgewandte Stirnfläche des Führungsklotzes (91) ist eine Anschlagfläche (93). Im Ausführungsbeispiel ist die Anschlagfläche (93) eine einachsig gewölbte Fläche, deren gedachte Krümmungsachse normal zur Längsrichtung (25) und parallel zu der Ebene der Führungsabschnitte (27) der Führungsbahnen (26) ausgerichtet ist. Beispielsweise liegt die Krümmungsachse oberhalb der genannten Ebene. Im Ausführungsbeispiel durchdringt die gedachte Krümmungsachse den Führungsklotz (91) oberhalb der Führungsbolzen (92). Die Anschlagfläche (93) kann auch zweiachsig, z.B. konvex gewölbt sein. Auch andere Ausbildungen der Anschlagfläche (93) sind denkbar.

Im eingebauten Zustand, vgl. die Figuren 2 - 4 und 7, ist die Anschlagfläche (93) des Führungsklotzes (91) der Schiebefläche (47) des Mitnahmeelements (40) zugewandt. Hierbei ist im Ausführungsbeispiel der Radius der Schiebefläche (47) größer als der Radius der Anschlagfläche (93), sodass in der Darstellung der Figur 2, 4 und 7 die beiden Flächen sich aneinander anschmiegen und sich nur in einer - parallel zu den gedachten Krümmungsachsen orientierten - Berührlinie (95) kontaktieren. Im dargestellten Ausführungsbeispiel übergreift die Schiebefläche (47) die Anschlagfläche (93).

Der Zylinder (72) der ersten Zylinder-Kolbeneinheit (71) hat im Ausführungsbeispiel einen Außendurchmesser von 8 Millimetern. Der Hub der Kolbenstange (74) beträgt z.B. 35 Millimeter. Mit dieser Zylinder-Kolbeneinheit (71) ist beispielsweise eine maximale Kraft von 98 Newton verzögerbar. Der Durchmesser der Kolbenstange (74) beträgt z.B. 23 % des Außendurchmessers des Zylinders (72).

Die Zylinderinnenwandung (78) dieses Zylinders (72) hat beispielsweise fünf Abschnitte (81 - 85). Ein erster, an den Zylinderkopf (79) angrenzender Abschnitt ist ein Ausgleichsabschnitt (81). An den Ausgleichsabschnitt (81) schließt sich ein kegelstumpfförmig ausgebildeter Abschnitt (82) an, der sich in Richtung des Zylinderbodens (75) verjüngt. Der gedachte Kegelwinkel beträgt beispielsweise ein Grad. Die Länge dieses Abschnitts beträgt beispielsweise 28 % des Zylinderhubs.

In Richtung des Zylinderbodens (75) grenzt an den kegelstumpfförmigen Abschnitt (82) ein zylinderförmiger Abschnitt (83) an. Die Länge dieses Abschnitts (83) beträgt im Ausführungsbeispiel 57 % des Zylinderhubs. Der Durchmesser des zylinderförmigen Abschnitts (83) beträgt im Ausführungsbeispiel 68 % des Außendurchmessers des Zylinders (72).

An den zylinderförmigen Abschnitt (83) schließt sich ein Freilaufabschnitt (84) an. Der Durchmesser der Zylinderinnenwandung (78) im Freilaufabschnitt (84) ist im Ausführungsbeispiel um 6 % größer als der Durchmesser der Zylinderinnenwandung (78) im zylinderförmigen Abschnitt (83). In den Darstellungen der Figuren 2 und 7, in denen die Kolbenstange (74) der ersten Zylinder-Kolbeneinheit (71) vollständig eingefahren ist, steht der Kolben (73) z.B. mittig im Freilaufabschnitt (84). Das Kolbendichtelement (86) ist ohne Kontakt zur Zylinderinnenwandung (78).

Zwischen dem Freilaufabschnitt (84) und dem Zylinderboden (75) ist ein Rückstellabschnitt (85) angeordnet. In diesem, sich beispielsweise zum Zylinderboden (75) hin verjüngendem kegelstumpfförmigen Rückstellabschnitt (85) sitzt in der Darstellung der Figur 2 die Rückstellfeder (76).

Der Zylinder (102) der zweiten Zylinder-Kolbeneinheit (101) hat im Ausführungsbeispiel einen Außendurchmesser von 10 Millimetern. Der Hub des mittels der Kolbenstange (104) geführten Kolbens (103) beträgt beispielsweise 15 Millimeter. Diese Zylinder-Kolbeneinheit (101) ist z.B. für eine maximale Kraft von 110 Newton ausgelegt. Der Durchmesser der Kolbenstange (104) beträgt beispielsweise 23 % des Außendurchmessers der Zylinder-Kolbeneinheit (101).

Der durch die Zylinderinnenwandung (108) begrenzte Zylinderinnenraum dieser Zylinder-Kolbeneinheit (101) umfasst einen Ausgleichsabschnitt (111), einen Führungsabschnitt (112) und einen Rückstellabschnitt (113). Der Ausgleichsabschnitt (111) grenzt an den Zylinderkopf (109) an. Sein Innendurchmesser beträgt z.B. 75 % des Außendurchmessers des Zylinders (102). Der Führungsabschnitt (112), dessen Länge größer ist als der Kolbenhub, ist in diesem Ausführungsbeispiel zylinderförmig ausgebildet. Der Innendurchmesser der Zylinderinnenwandung (108) im Führungsabschnitt (112) beträgt beispielsweise 60 % des Außendurchmessers des Zylinders (102). Der beispielsweise ebenfalls zylinderförmig ausgebildete Rückstellabschnitt (113) liegt zwischen dem Führungsabschnitt (112) und dem Zylinderboden (105). In Rückstellabschnitt (113) sitzt die Rückstellfeder (106).

Die erste Zylinder-Kolbeneinheit (71) und die zweite Zylinder-Kolbeneinheit (101) können auch gleichartig aufgebaut sein. Auch ist es denkbar, z.B. den kegelstumpfförmig ausgebildeten Abschnitt (82) und/oder den Freilaufabschnitt (84) länger oder kürzer als beschrieben auszubilden.

Im Trägergehäuse (13) ist die erste Zylinder-Kolbeneinheit (71) mittels der Seitenteile (14, 15), den Führungsleisten (21, 22) und den Führungsstegen (33, 34) in radialer Richtung gehalten. In der Längsrichtung (25), also in axialer Richtung der Zylinder-Kolbeneinheit (71), ist die Zylinder-Kolbeneinheit (71) im Trägergehäuse (13) verschiebbar gelagert. In der Darstellung der Figur 2 stützt sie sich mit dem Zylinderboden (75) am Kopf (107) der Kolbenstange (104) der zweiten Zylinder-Kolbeneinheit (101) ab. Beispielsweise liegt die Kolbenstange (104) zentrisch am Zylinderboden (75) an. Der Führungsklotz (91) liegt in dieser Darstellung mit der Anschlagfläche (93) an der Schiebefläche (47) des Mitnahmeelements (40) an.

Die zweite Zylinder-Kolbeneinheit (101) ist im Trägergehäuse (13) in radialer Richtung mittels der Seitenteile (14, 15), den Führungsleisten (19) und den Führungsstegen (32) gehalten. Im Ausführungsbeispiel ist diese Zylinder-Kolbeneinheit (101) in Längsrichtung (25) verschiebbar gelagert. In der Darstellung der Figur 2 liegt der Zylinderboden (105) an der Rückwand (17) an. Die Kolbenstange (104) belastet den Zylinderboden (75) der ersten Zylinder-Kolbeneinheit (71).

Der Zylinder (102) der zweiten Zylinder-Kolbeneinheit (101) kann im Trägergehäuse (13) in axialer Richtung fixiert sein. Auch ist es denkbar, die erste (71) und/oder die zweite Zylinder-Kolbeneinheit (101) derart anzuordnen, dass die jeweilige Kolbenstange (74, 104) in Richtung der Rückwand (17) zeigt. In diesem Fall ist der Führungsklotz (91) beispielsweise am Zylinder (72) der ersten Zylinder-Kolbeneinheit (71) angeordnet.

Wird beispielsweise die zweite Zylinder-Kolbeneinheit (101) mit einer zur Rückwand (17) zeigenden Kolbenstange (104) angeordnet, kann diese Kolbenstange (104) an der Rückwand (17) fixiert sein und der Zylinder (102) im Trägergehäuse (13) in Längsrichtung (25) verschiebbar gelagert sein.

Die kombinierte Beschleunigungs- und Verzögerungsvorrichtung (10) kann auch nur mit einer Zylinder-Kolbeneinheit (71) ausgeführt sein. Diese ist dann beispielsweise so ausgebildet wie die oben beschriebene erste Zylinder-Kolbeneinheit (71). Der der Rückwand (17) zugewandte Teil dieser Zylinder-Kolbeneinheit (71) kann im Trägergehäuse (13) in axialer Richtung fixiert sein.

Bei der Montage werden die Zylinder-Kolbeneinheiten (71; 101) mit dem Führungsklotz (91) sowie das Mitnahmeelement (40) in das Trägergehäuse (13) eingesetzt. Hierbei verrasten die Zylinder-Kolbeneinheiten (71; 101) zwischen den Führungsleisten (19, 21, 22) und den Führungsstegen (32 - 34). Das Mitnahmeelement (40) rastet in den Führungsbahnen (26) ein. Zum Abschluss wird die Zugfeder (61) in das Mitnahmeelement (40) und in das Trägergehäuse (13) eingehängt. Gegebenenfalls kann am Verbindungssteg (18) auf der dem Mitnahmeelement (40) zugewandten Seite ein Elastomerkörper angeordnet werden.

In den Figuren 1 und 2 ist die Beschleunigungs- und Verzögerungsvorrichtung (10) mit dem in der Endposition (12) stehenden Mitnahmeelmenet (40) dargestellt. Beispielsweise ist die Schublade oder die Schiebetür geschlossen. Die Kolben (73; 103) und die Kolbenstangen (74; 104) der Zylinder-Kolbeneinheiten (71; 101) sind eingefahren. Die Rückstellfedern (76; 106) sind belastet. Der Federenergiespeicher (61) ist entlastet.

Beispielsweise beim Öffnen der Schublade oder der Schiebetür zieht der Mitnehmer (1) das Mitnahmeelement (40) aus der Endposition (12) in der Öffnungsrichtung (3) in Richtung der Parkposition (11), vgl. Figur 3. Der Federenergiespeicher (61) wird geladen. Die Schiebefläche (47) löst sich von der Anschlagfläche (93). Die Rückstellfeder (106) der zweiten Zylinder-Kolbeneinheit (101) entspannt sich und schiebt den Kolben (103) in Richtung des Zylinderkopfs (109). Die am Kolben (103) befestigte Kolbenstange (104) wird ausgefahren. Die Kolbenstange (104) drückt auf den Zylinderboden (75) der ersten Zylinder-Kolbeneinheit (71) und verschiebt die gesamte Zylinder-Kolbeneinheit (71) relativ zum Trägergehäuse (71) in Richtung des Mitnahmeelements (40). Gleichzeitig wird die Rückstellfeder (76) der ersten Zylinder-Kolbeneinheit (71) entlastet. Sie verschiebt den Kolben (73) in Richtung des Zylinderkopfes (79). Die mittels des Führungsklotzes (91) geführte Kolbenstange (74) fährt aus.

Die Beschleunigung und die Ausfahrgeschwindigkeit der Kolbenstange (104) der zweiten Zylinder-Kolbeneinheit (101) und die Beschleunigung und Verfahrgeschwindigkeit der ersten Zylinder-Kolbeneinheit (71) werden von der Rückstellfeder (106) der zweiten Zylinder-Kolbeneinheit (101) und der Trägheit der bewegten Massen bestimmt. Die Beschleunigung und die Ausfahrgeschwindigkeit der Kolbenstange (74) der ersten Zylinder-Kolbeneinheit (71) werden bestimmt von der Rückstellfeder (76) der ersten Zylinder-Kolbeneinheit (71) und der Massenträgheit der bewegten Massen. Diese Geschwindigkeiten sind unabhängig vom Federenergiespeicher (61).

Das Mitnahmeelement (40) wird weiter in Richtung der Parkposition (11) verfahren, bis die Führungszapfen (41) in den Halteabschnitt (28) einfahren. Das Mitnahmeelement (40) schwenkt hierbei um die hinteren Führungszapfen (42). Diese Schwenkbewegung wird mittels der Zugfeder (61) unterstützt. Das Mitnahmeelement (40) verrastet im Ausführungsbeispiel kraft- und formschlüssig gesichert in der Parkposition (11), vgl. Figur 4. Gegebenenfalls kann die Geräuschentwicklung beim Verrasten mittels des auf dem Verbindungssteg (18) angeordneten Elastomerelements vermindert werden. Beim weiteren Öffnen der Schublade oder der Schiebetür löst sich der Mitnehmer (1) vom Mitnahmeelement (40). Die Schublade oder die Schiebetür kann nun weiter geöffnet werden.

Die beiden Kolbenstangen (74; 104) werden beispielsweise weiter ausgefahren, bis der Führungsklotz (91) mit seiner Anschlagfläche (93) an der Schiebefläche (47) des Mitnahmeelements (40) anliegt. Es ist jedoch auch denkbar, dass bei vollständig ausgefahrenen Kolbenstangen (74; 104) die Anschlagfläche (93) von der Schiebefläche (47) beabstandet ist.

Beim erneuten Schließen der Schiebetür oder der Schublade verfährt der Mitnehmer (1) relativ zur Beschleunigungs- und Verzögerungsvorrichtung (10) in der Schließrichtung (2), vgl. Figur 4. Vor dem Erreichen der geschlossenen Endlage der Schiebetür oder der Schublade kontaktiert der Mitnehmer (1) die Schubfläche (52) des Schubzapfens (45) des Mitnahmeelements (40). Das Mitnahmeelement (40) wird geschwenkt, sodass beide Führungszapfenpaare (41, 42) im Führungsabschnitt (27) sitzen. Der geladene Federenergiespeicher (61) wird entlastet. Die Schiebefläche (47) belastet die Anschlagfläche (93). Die beiden Flächen (47, 93) berühren sich in einer Berührlinie (95). Beispielsweise beim Schwenken des Mitnahmeelements (40) gleitet die Anschlagfläche (47) entlang der Schiebefläche (93). Beim Schwenken wandert die Berührlinie (95) sowohl relativ zum Mitnahmeeelement (40) als auch relativ zum Führungsklotz (91). Der im Führungsabschnitt (27) gelagerte Führungsklotz (91) verhindert selbst bei einem exzentrischen Kraftangriff auf das Mitnahmeelement (40) eine Verformung der Kolbenstange (74). Auch bei mehrfachem schlagartigen Kraftangriff auf die Schubfläche (52) werden die nicht in der Längsrichtung (25) orientierten Kraftkomponenten über den Führungsklotz (91) und die Führungsbahnen (26) in das Trägergehäuse (13) geleitet. Hiermit wird ein außermittiger Kraftangriff an der Kolbenstange (74), der zu Undichtigkeiten der Zylinder-Kolbeneinheiten (71, 101) führen könnte, verhindert.

Die Kolbenstange (74) belastet den Kolben (73) und dieser wirkt über das Öl im Vedrängungsraum (87) auf den Zylinderboden (75) und die Kolbenstange (104) der zweiten Zylinder-Kolbeneinheit (101). Die Kolbenstange (74) der ersten Zylinder-Kolbeneinheit (71) und die Kolbenstange (104) der zweiten Zylinder-Kolbeneinheit (101) werden eingefahren. Auf beide Kolbenstangen (74, 104) wirkt zumindest annähernd die gleiche Kraft. Der Hub des Mitnahmeelements (40) entspricht der Summe der Hübe des Kolbens (73) der ersten Zylinder-Kolbeneinheit (71) und des Kolbens (103) der zweiten Zylinder-Kolbeneinheit (101).

Beim Verfahren des Mitnahmeelements (40) gelangt der Kolben (73) der ersten Zylinder-Kolbeneinheit (71) in den kegelstumpfförmigen Abschnitt (82). Die der Einfahrbewegung entgegengesetzte Verzögerungskraft steigt stark an. In der zweiten Zylinder-Kolbeneinheit (101) verfährt der Kolben (103) im Führungsabschnitt (112). Hier erfolgt beispielsweise ein zum Kolbenhub linearer Anstieg der Gegenkraft. Je nach dem momentanen Verhältnis der Gegenkraft der zweiten Zylinder-Kolbeneinheit (101) und der Verzögerungskraft der ersten Zylinder-Kolbeneinheit (71) werden die jeweiligen Kolben (73; 103) eingefahren. Hierbei ergibt sich die resultierende Verzögerung aus der Überlagerung der Verzögerung der beiden Zylinder-Kolbeneinheiten. Das Mitnahmeelement (40) und damit die Schublade oder die Schiebetür werden stark verzögert.

Sobald der Kolben (73) der ersten Zylinder-Kolbeneinheit (71) den zylinderförmigen Abschnitt (83) erreicht, verläuft dort der Anstieg der Verzögerungskraft linear zum Hub. In der zweiten Zylinder-Kolbeneinheit (101) besteht weiterhin ein lineares Verhältnis zwischen der Gegenkraft und dem Hub. Das Mitnahmeelement (40) wird weitgehend linear zu seinem Hub verzögert.

Beim Erreichen des Freilaufabschnitts (84) verliert der Kolben (73) der ersten Zylinder-Kolbeneinheit (71) den Kontakt mit der Zylinderinnenwandung (78). Die Verzögerungskraft der ersten Zylinder-Kolbeneinheit (71) sinkt ab. Der Kolben (103) der zweiten Zylinder-Kolbeneinheit (101) verfährt weiterhin im Führungsabschnitt (112). Die Gesamtverzögerung wird nun wesentlich durch die zweite Zylinder-Kolbeneinheit (101) bestimmt. Sobald die Kolben (73, 103) ihre Kolbenendlage erreicht haben, steht das Mitnahmeelement (40) in der Endposition (12), vgl. Figur 2.

Die einzelnen Zylinder-Kolbeneinheiten (71, 101) können lineare oder nichtlineare Kraft-Hub-Kennlinien haben. In der gesamten Beschleunigungs- und Verzögerungsvorrichtung (10) kann damit nahezu jede beliebige Kraft-Hub-Kennlinie verwirklicht werden. Beim Einsatz einer ersten Zylinder-Kolbeneinheit (71) und einer zweiten Zylinder-Kolbeneinheit (101) können diese Standardeinheiten sein. Damit können auch große Massen von Schiebetüren, beispielsweise über 40 Kilogramm entlang eines Hubes von z.B. 50 Millimetern gesteuert abgebremst und angehalten werden.

Auch Kombinationen der einzelnen Ausführungsbeispiele sind denkbar.

### Bezugszeichenliste:

- 1: Mitnehmer
- 2: Schließrichtung
- 3: Öffnungsrichtung
- 10: Beschleunigungs- und Verzögerungsvorrichtung
- 11: Parkposition
- 12: Endposition
- 13: Trägergehäuse
- 14: Seitenteil
- 15: Seitenteil
- 16: Stirnwand
- 17: Rückwand
- 18: Verbindungssteg
- 19: Führungsleisten
- 21: Führungsleisten
- 22: Führungsleisten
- 23: Befestigungsdurchbrüche
- 24: Boden
- 25: Längsrichtung
- 26: Führungsbahnen
- 27: Führungsabschnitt
- 28: Halteabschnitt
- 29: Übergangsabschnitt
- 31: Oberseite
- 32: Führungssteg, Mitte
- 33: Führungssteg, Mitte
- 34: Führungssteg, Mitte
- 35: Längsschlitze
- 36: Federaufnahme
- 40: Mitnahmeelement
- 41: Führungszapfen
- 42: Führungszapfen
- 43: Tragkörper
- 44: Zugzapfen
- 45: Schubzapfen
- 46: Federaufnahme
- 47: Schiebefläche
- 48: Aufnahmeausnehmung
- 49: Aussparung
- 51: Verstärkungsrippen
- 52: Schubfläche
- 60: Beschleunigungsvorrichtung
- 61: Federenergiespeicher, Zugfeder
- 70: Verzögerungsvorrichtung
- 71: erste Zylinder-Kolbeneinheit
- 72: Zylinder
- 73: Kolben
- 74: Kolbenstange
- 75: Zylinderboden
- 76: Rückstellfeder
- 77: Kolbenstangenkopf
- 78: Zylinderinnenwandung
- 79: Zylinderkopf
- 81: Ausgleichsabschnitt
- 82: kegelstumpfförmig ausgebildeter Abschnitt
- 83: zylinderförmiger Abschnitt
- 84: Freilaufabschnitt
- 85: Rückstellabschnitt
- 86: Kolbendichtelement
- 87: Verdrängungsraum
- 91: Führungsklotz
- 92: Führungsbolzen
- 93: Anschlagfläche
- 95: Berührlinie
- 101: zweite Zylinder-Kolbeneinheit
- 102: Zylinder
- 103: Kolben
- 104: Kolbenstange
- 105: Zylinderboden
- 106: Rückstellfeder
- 107: Kolbenstangenkopf
- 108: Zylinderinnenwandung
- 109: Zylinderkopf
- 111: Ausgleichsabschnitt
- 112: Führungsabschnitt
- 113: Rückstellabschnitt

## Patentansprüche

1. Kombinierte Beschleunigungs- und Verzögerungsvorrichtung (10) mit einem Trägergehäuse (13) und mit einem entlang mindestens einer Führungsbahn (26) des Trägergehäuses (13) zwischen einer kraft- und/oder formschlüssig arretierbaren Parkposition (11) und einer Endposition (12) verfahrbaren, mittels einer Beschleunigungsvorrichtung (60) und mittels einer Verzögerungsvorrichtung (70) belastbaren Mitnahmeelement (40), wobei die Beschleunigungsvorrichtung (60) einen wiederholbar be- und entladbaren, am Trägergehäuse (13) und am Mitnahmeelement (40) gelagerten Federenergiespeicher (61) aufweist, wobei die Verzögerungsvorrichtung (70) mindestens eine hydraulische Zylinder-Kolbeneinheit (71) aufweist, wobei die Zylinder-Kolbeneinheit (71) einen dem Mitnahmeelement (40) zugewandten, in der Führungsbahn (26) geführten Führungsklotz (91) trägt, wobei der Führungsklotz (91) eine in Richtung des Mitnahmeelements (40) zeigende, gewölbte Anschlagfläche (93) hat und wobei das Mitnahmeelement (40) eine in Richtung des Führungsklotzes (91) zeigende, gewölbte Schiebefläche (47) aufweist, **dadurch gekennzeichnet,**
- **dass** die hydraulische Zylinder-Kolbeneinheit (71) eine Federrückstellung (76) aufweist,
- **dass** die Schiebefläche (47) und die Anschlagfläche (93) unterschiedliche Wölbungsradien haben, sodass sich die Anschlagfläche (93) und die Schiebefläche (47) maximal in einer Berührlinie (95) kontaktieren und
- **dass** beim Verfahren des Mitnahmeelements (40) aus der Endposition (12) in Richtung der Parkposition (11) die Schiebefläche (47) von der Anschlagfläche (95) lösbar ist.

2. Kombinierte Beschleunigungs- und Verzögerungsvorrichtung (10) nach Anspruch 1, **dadurch gekennzeichnet, dass** die Schiebefläche (47) die Anschlagfläche (93) übergreift.

3. Kombinierte Beschleunigungs- und Verzögerungsvorrichtung (10) nach Anspruch 1, **dadurch gekennzeichnet, dass** beide Wölbungen einachsige Krümmungen mit parallel zueinander liegenden gedachten Krümmungsachsen sind.

4. Kombinierte Beschleunigungs- und Verzögerungsvorrichtung (10) nach Anspruch 3, **dadurch gekennzeichnet, dass** die Krümmungsachsen normal zur Längsrichtung (25) und parallel zur Ebene von in Längsrichtung (25) orientierten Führungsabschnitten (27) der Führungsbahnen (26) angeordnet sind.

5. Kombinierte Beschleunigungs- und Verzögerungsvorrichtung (10) nach Anspruch 1, **dadurch gekennzeichnet, dass** der Führungsklotz (91) Führungsbolzen (92) hat, deren Führungslänge in Längsrichtung (25) größer ist als die Höhe der Führungsbahn (26) normal zur Längsrichtung (25) und normal zur Ebene der Führungsabschnitte (27).

6. Kombinierte Beschleunigungs- und Verzögerungsvorrichtung (10) nach Anspruch 1, **dadurch gekennzeichnet, dass** die Zylinder-Kolbeneinheit (71) in axialer Richtung verschiebbar im Trägergehäuse (13) gelagert ist.

7. Kombinierte Beschleunigungs- und Verzögerungsvorrichtung (10) nach Anspruch 1, **dadurch gekennzeichnet, dass** die Kraft-Hub-Kennlinie der Zylinder-Kolbeneinheit (71) nichtlinear ausgebildet ist.

8. Kombinierte Beschleunigungs- und Verzögerungsvorrichtung (10) nach Anspruch 1, **dadurch gekennzeichnet, dass** sie eine zweite, in Reihe mit der ersten Zylinder-Kolbeneinheit (71) angeordnete Zylinder-Kolbeneinheit (101) umfasst.

9. Kombinierte Beschleunigungs- und Verzögerungsvorrichtung (10) nach Anspruch 8, **dadurch gekennzeichnet, dass** die beiden Zylinder-Kolbeneinheiten (71; 101) unterschiedliche Kraft-Hub-Kennlinien haben.

## Claims

1. A combined accelerating and retarding apparatus (10) comprising a supporting housing (13) and an entrainment element (40) movable along at least one guiding track (26) of the supporting housing (13) between a parked position (11) in which it is retained by a force lock and/or a shape lock and an end position (12), said entrainment element (40) adapted to be loaded by accelerating means (60) and by retarding means (70), said accelerating means (60) comprising a repeatedly loadable and unloadable spring-type energy storage device (61) secured to the supporting housing (13) and to the entrainment element (40), said retarding means (70) comprising at least one hydraulic cylinder-piston (71) unit and the cylinder-piston unit (71) carrying a guide block (91) facing the entrainment element (40) and guided in the guide track (26), the guide block (91) having a curved engagement surface (93) turned towards the entrainment element (40) and the entrainment element (40) having a curved push surface (47) turned in the direction of the guide block (91), **characterized in that**
- the hydraulic cylinder-piston unit (71) has a spring return feature (76) associated therewith;
- the pushing surface (47) and the engagement surface (93) have different radii of curvature so that the engagement surface (93) and the push surface (47) contact each other along one line of contact at most; and **in that**
- the push surface (47) is separable from the engagement surface (95) as the entrainment element (40) leaves the end position (12) in the direction of the parked position (11).

2. Combined accelerating and retarding apparatus (10) as claimed in claim 1, **characterized in that** the push surface (47) overlaps the engagement surface (93).

3. Combined accelerating and retarding apparatus (10) as claimed in claim 1, **characterized in that** both curvatures constitute single-axis curvatures having axes of curvature extending in parallel with each other.

4. Combined accelerating and retarding apparatus (10) as claimed in claim 3, **characterized in that** the axes of curvature extend in a direction normal to the longitudinal direction (25) and in parallel with the plane of guide sections (27) of the guide tracks (26), said guide sections (27) oriented in the longitudinal direction (25).

5. Combined accelerating and retarding apparatus (10) as claimed in claim 1, **characterized in that** the guide block (91) has guide bolts (92) of which the guiding length in the longitudinal direction (25) is greater than the height of the guide track (26) in a direction normal to the longitudinal direction (25) and normal to the plane of the guide sections (27).

6. Combined accelerating and retarding apparatus (10) as claimed in claim 1, **characterized in that** the cylinder-piston unit (71) is supported in supporting housing (13) for displacement in the axial direction.

7. Combined accelerating and retarding apparatus (10) as claimed in claim 1, **characterized in that** the force-stroke response characteristic of the cylinder-piston unit (71) is designed to be non-linear.

8. Combined accelerating and retarding apparatus (10) as claimed in claim 1, **characterized in** comprising a second cylinder-piston unit (101) disposed in line with said first cylinder-piston unit (71).

9. Combined accelerating and retarding apparatus (10) as claimed in claim 8, **characterized in that** the two cylinder-piston units (71; 101) have different force-displacement response characteristics.

## Revendications

1. Dispositif combiné d'accélération et de décélération (10) comportant un boîtier support (13) et un élément entraîneur (40) qui peut être déplacé le long d'au moins une voie de guidage (26) du boîtier support (13), entre une position de stationnement (11) blocable par adhérence et/ou par engagement positif, et une position finale (12), l'élément entraîneur (40) étant susceptible d'être chargé à l'aide d'un dispositif d'accélération (60) et d'un dispositif de décélération (70), le dispositif d'accélération (60) présentant un accumulateur d'énergie à ressort (61) qui peut être chargé et déchargé à répétition et qui est monté sur le boîtier support (13) et sur l'élément entraîneur (40), le dispositif de décélération (70) comportant au moins une unité cylindre-piston hydraulique (71), l'unité cylindre-piston (71) portant un bloc de guidage (91) qui est orienté vers l'élément entraîneur (40) et qui est guidé dans la voie de guidage (26), le bloc de guidage (91) ayant une surface de butée bombée (93) orientée vers l'élément entraîneur (40) et l'élément entraîneur (40) ayant une surface de coulissement bombée (47) orientée vers le bloc de guidage (91), **caractérisé en ce**
- **que** l'unité cylindre-piston hydraulique (71) est équipée d'un système de rappel par ressort (76),
- **que** la surface de coulissement (47) et la surface de butée (93) ont des rayons de courbure différents de sorte que la surface de coulissement (47) et la surface de butée (93) entrent en contact au maximum en une seule ligne de contact (95) et
- **que** lors du déplacement de l'élément entraîneur depuis sa position finale (12) vers la position de stationnement (11), la surface de coulissement (47) peut être détachée de la surface de butée (95).

2. Dispositif combiné d'accélération et de décélération (10) selon la revendication 1, **caractérisé en ce que** la surface de coulissement (47) recouvre la surface de butée (93).

3. Dispositif combiné d'accélération et de décélération (10) selon la revendication 1, **caractérisé en ce que** les deux courbures sont des courbures uniaxiales avec des axes de courbure imaginaires parallèles les uns aux autres.

4. Dispositif combiné d'accélération et de décélération (10) selon la revendication 3, **caractérisé en ce que** les axes de courbure sont disposés perpendiculairement à la direction longitudinale (25) et parallèlement au plan des sections de guidage (27), orientées dans la direction longitudinale (25), des voies de guidage (26).

5. Dispositif combiné d'accélération et de décélération (10) selon la revendication 1, **caractérisé en ce que** le bloc de guidage (91) dispose de boulons de guidage (92) dont la longueur de guidage dans la direction longitudinale (25) est plus grande que la hauteur de la voie de guidage (26) perpendiculaire à la direction longitudinale (25) et perpendiculaire au plan des sections de guidage (27).

6. Dispositif combiné d'accélération et de décélération (10) selon la revendication 1, **caractérisé en ce que** l'unité cylindre-piston (71) est logée dans le boîtier support (13) de manière coulissante dans la direction axiale.

7. Dispositif combiné d'accélération et de décélération (10) selon la revendication 1, **caractérisé en ce que** la caractéristique force-course de l'unité cylindre-piston (71) n'est pas linéaire.

8. Dispositif combiné d'accélération et de décélération (10) selon la revendication 1, **caractérisé en ce qu'**il comporte une deuxième unité cylindre-piston (101) montée en série avec la première unité cylindre-piston (71).

9. Dispositif combiné d'accélération et de décélération (10) selon la revendication 8, **caractérisé en ce que** les deux unités cylindre-piston (71 ; 101) ont des caractéristiques force-course différentes.
